# EUROPEAN PATENT APPLICATION

(11) **EP 1 443 070 A1**
(43) Date of publication of application: **04.08.2004**
(21) Application number: 04000903.7
(22) Date of filing: 16.01.2004
(51) Int. Cl.: C08J 5/18, C08K 5/01, C08K 5/103, C08L 23/06

(54) **Food-packaging polyethylene film**

(30) Priority: 28.01.2003 IT to20030043
(71) Applicant: Nuova Poliver di Oddone Colomba & C. S.n.c., 15070 Tagliolo Monferrato (AL) (IT)
(72) Inventor: Malaspina, Alberto, 15076 Ovada (AL) (IT)
(74) Representative: Spandonari, Carlo, Dr. Ing.

(57) **Abstract**

The invention is concerned with a film for packing foodstuff. The film comprises at least one layer of polyethylene containing in its mix a vegetable or mineral oil in a percentage in the range 0.2% to 5% by weight.

## Description

This invention relates to a polyethylene film for packing foodstuff.

In both the home environment and in canteens, self-service or fast-food restaurants, etc., there is widespread use of transparent polyethylene film for covering food trays or containers, in order to insulate foodstuffs from the outside, and thereby preserve them from contamination and enhancing their conservation. These films are usually rolled up on a cylindrical cardboard core. In order to favor a sealing adherence of the film to the rim of the tray or container (which, being usually glass, stainless steel or smooth plastics, has a specially sticky surface) a fraction of an adhesive, such as linear, long-chain polyethylene or polyisobutylene, is added to the compound.

The above approach, however, does have a number of drawbacks. Firstly, the glue makes it more difficult for the operator to unroll the film. Secondly, as the film inevitably tends to fold and crumple during handling, the adhesive will cause it to stick on itself, thereby often becoming unusable, with considerable waste of material.

The main object of the present invention is therefore to provide a polyethylene film for foodstuff-packing which will effectively stick to trays, containers and/or foodstuff enveloped therein, and which is, at the same time, easier to unroll and handle with respect to known films.

The above and other objects and advantages, that will become apparent below, are achieved with a film having the features recited in claim 1, while the dependent claims recite other advantageous features.

The invention will now be described in more detail, as shown by way of non limiting example in the attached drawings, wherein:
Fig. 1 is a perspective view of a tray containing foodstuff, covered with a generic polyethylene film;
Fig. 2 is a view in cross-section of a film according to the invention.

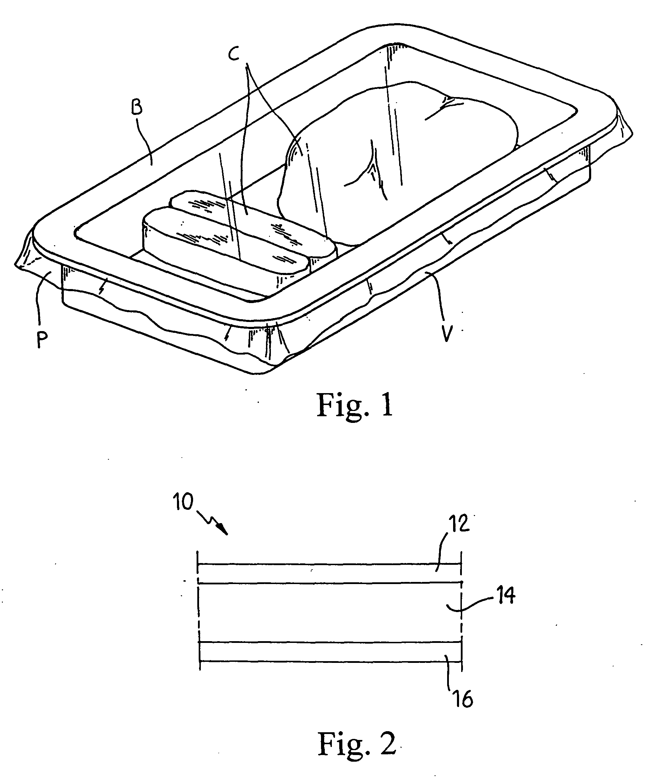

With initial reference to Fig. 1, a generic film P may be used, for instance, to cover a tray V of glass, stainless steel, plastics, etc., which contains foodstuff C which it is desired to seal. To such a purpose, the film is made to stick to the rim B of the tray, taking advantage from the smoothness of its surface. The film is also commonly used to envelope solid foods for conservation (for example) in a refrigerator.

According to conventional technology, polyethylene films are manufactured in blown-film co-extrusion plants having five, or three, or one extruder, depending on the number of desired layers.With reference to Fig. 2, according to the invention a film 10 is made with three superposed layers of polyethylene, whereby the internal layer 14 comprises mixes of low-density polyethylene and linear polyethylene, and has a thickness of 5.7 µm, while the external layers 12, 16 incorporate a fraction of oil, or oil mixture, of natural or mineral origin, in the range 0.5% to 5% by weight, and have both a thickness of 1.9 µm, so that the overall thickness of the film is 9.5 µm. In case of a single extruder, a mixture of low-density polyethylene and linear polyethylene is made with the addition of oil in a percentage in the range 0.5% to 5% by weight.

For the preparation of the mixes, the components, which have initially a granular form, are fed in the given percentages to stockage silos where they are stirred for a time length of half an hour to one hour for homogenizing purposes. The mixes so obtained are fed to the individual extruders, each of which is set to a predetermined operating temperature according to criteria well known to the expert in the art. In a manner known per se, the extruders join into a single drawplate, from which issues a film made by co-extrusion of the individual layers. Where the extruders are provided with devices for the direct injection of liquids to the auger, the oil, rather than being loaded into the silo, is supplied directly during the extrusion step. The extruded material is then cut to the desired width and is rolled into reels, from which film rolls are subsequently prepared.

A few examples are given below of polyethylene films made by adding natural oils of different origins.

### Example 1:

A three-layer film was made by adding 1% by weight of vaseline oil for use in wine-making to the outside layers. The oil used had a density of 860 to 890 kg/cbm at 15°C, a viscosity of 61.2 to 77 cSt at 40°C, and 8.5 to 10 cSt at 100°C. The extruded film thus obtained has been found to effectively adhere to smooth surfaces and solid foodstuff enveloped therein, and it has further been found that the lubricating action of the oil appears to help the outflow of material from the extruder.

### Example 2:

A three-layer film was made by adding 1% by weight sunflower-seed oil to the outside layers. The oil used contained 29.4% by weight oleic acid and 59.4% linoleic acid. The remaining fraction comprises other acids in minor percentages. Also in this case, the film has good adhesive properties and good ouflow from the extruder.

### Example 3:

A five-layer film was made by adding 2% by weight corn oil to the outside layers. The oil used contained 28.0% by weight oleic acid and 56.3% linoleic acid. The remaining fraction comprises other acids in minor percentages. The film has adherence and outflow properties equivalent to the previous examples.

### Example 4:

A five-layer film was made by adding 0.5% by weight colza oil to the outside layers. The oil used contained 57.0% by weight oleic acid and 21.5% linoleic acid. The remaining fraction comprises other acids in minor percentages. In this case, too, the film exhibited properties of adherence and outflow from the extruder that were similar to the previous examples.

### Example 5:

A five-layer film was made by adding 0.5% by weight vaseline oil (of the kind used in Example 1) and 0.5% by weight colza oil (of the kind used in Example 4) to the outside layers. The film exhibited properties of adherence and outflow comparable to the films of previous examples.

In general, although vaseline oil is the choice preferred by the inventor fro the above-listed purposes, no significant differences have been observed among the film properties when changing the oil.

In practice, it has been found that the addition of oil will improve to a surprising degree the adhesive properties of the film both with trays or containers and with foodstuff of any kind, even moist or fat foodstuff. The enhanced adhesive property, which may appear paradoxical to a person skilled in the art, considering that oil is normally used to reduce, rather than enhance, adherence between surfaces, should be attributed to a "sucking" action caused by the oil, which, flowing between the surfaces, cancels the superficial roughness of the film and of the surface touched by the film. At the same time, the adhesive-free film is easy to grasp and to unwind from the roll and generally to handle, because it will not stick to itself when it becomes folded or twisted during use. Moreover, the oil also acts as a lubricant to reduce the friction of the material with the auger during extrusion and helping the action of the extruder.

A preferred embodiment of the invention has been described, but obviously, persons skilled in the art will make changes and modifications within the same inventive concept. For instance, other oils of natural origin may be used to achieve comparable results, such as peanut oil, olive oil, and the like. Further, the number of superposed layers constituting the film should not be regarded as a significant feature, as the film may comprise a single layer, provided that such layer contains an oil fraction in the range mentioned above.

## Claims

1. A film for packing foodstuff, **characterized in that** it comprises at least one layer of polyethylene containing in its mix a vegetable or mineral oil in a percentage in the range 0.2% to 5% by weight.

2. The film of claim 1, **characterized in that** the percentages of the oil in in the range 0.5% to 1.5% by weight.

3. The film of claim 1 or 2, **characterized in that** said oil is vaseline oil.

4. The film of claim 1 or 2, **characterized in that** said oil is sunflower oil.

5. The film of claim 1 or 2, **characterized in that** said oil is corn oil.

6. The film of claim 1 or 2, **characterized in that** said oil is colza oil.

7. The film of claim 1 or 2, **characterized in that** said oil is a mixture of a plurality of oils of natural origin.

8. The film of claim 7, **characterized in that** said mixture of oils includes vaseline oil and colza oil.

9. The film of any of the previous claims, comprising three superposed layers of polyethylene, **characterized in that** both outside layers contain said oil in admixture.

10. The film of claim 9, **characterized in that** each of said outside layers has a thickness of 1.9 µm and the inside layer has a thickness of 5.7 µm.

11. The film of any of claims 1 to 8, comprising five superposed layers of polyethylene, **characterized in that** both outside layers contain said oil in admixture.

12. The film of claim 11, **characterized in that** each of said polyethylene layers has a thickness of 1.9 µm.

13. The film of any of claims 1 to 8, **characterized in that** it comprises a single layer of polyethylene, containing in its mix said vegetable or mineral oil in a percentage in the range 0.5% to 5% by weight, and having a thickness of 9.5 µm.
